**Europäisches Patentamt**

**European Patent Office**

**Office européen des brevets**

(19)

(11) Veröffentlichungsnummer: **0 152 816**
**B1**

(12) **EUROPÄISCHE PATENTSCHRIFT**

(45) Veröffentlichungstag der Patentschrift:
**22.04.87**

(51) Int. Cl.⁴: **B 60 T 15/02**

(21) Anmeldenummer: **85100850.8**

(22) Anmeldetag: **28.01.85**

(54) Handbremsventil für Bremsanlagen, insbesondere von Kraftfahrzeugen.

(30) Priorität: **23.02.84 DE 3406627**

(43) Veröffentlichungstag der Anmeldung:
**28.08.85 Patentblatt 85/35**

(45) Bekanntmachung des Hinweises auf die Patenterteilung:
**22.04.87 Patentblatt 87/17**

(84) Benannte Vertragsstaaten:
**BE DE FR IT SE**

(56) Entgegenhaltungen:
**DE - A - 2 936 637**
**FR - A - 2 201 408**
**GB - A - 1 097 400**

(73) Patentinhaber: **KNORR-BREMSE AG, Moosacher Strasse 80 Postfach 401060, D-8000 München 40 (DE)**

(72) Erfinder: **Brefka, Klaus, Spitzsteinstrasse 19, D-8091 Edling (DE)**
Erfinder: **Tischler, Karl-Heinz, Hildeboldstrasse 28, D-8000 München 40 (DE)**

## Beschreibung

Die Erfindung betrifft ein Handbremsventil nach dem Gattungsbegriff des Patentanspruches 1, wie es z.B. aus der DE-A-2 936 637 bekannt ist.

Derartige Handbremsventile dienen zur Betätigung einer mit Federspeicherbremszylindern ausgerüsteten Feststell- und Hilfsbremsanlage, welche durch Betätigung des Handbremsventils feinfühlig abstufbar ist und gleichzeitig zur Betätigung der Anhänger-Bremsanlage verwendet werden kann. Bei der Betätigung von Handbremsventilen dieser Art ist ein Kipphebel, ausgehend von der Fahrposition, in eine Hilfsbremsposition schwenkbar, wobei in diesem Drehbereich ein feinfühlig abgestuftes Betätigen der Feststell- und Hilfsbremsanlage als auch der durch das Handbremsventil steuerbaren Anhänger-Bremsanlage möglich ist. Bei Erreichen der sogenannten Parkbremsstellung ist eine absolut sichere Verriegelung des Kipphebels erforderlich, um ein unbeabsichtigtes Lösen der Bremsanlage zu verhindern.

Aus der vorgenannten Feststell- bzw. Parkbremsstellung kann der Kipphebel in eine Prüf- oder Kontrollstellung bewegt werden; in dieser Stellung gestattet das Handbremsventil bei eingelegter Parkbremse eine Kontrolle der alleinigen Bremswirkung der Bremsanlage des Zugfahrzeuges bei gelöster Bremse im Anhänger.

Die Schwenkbewegungen des Kipphebels unter Führung der Schaltkulisse werden mit Hilfe eines am äusseren Ende des Kipphebels angeordneten Schaltgriffes vollzogen, wobei der Schaltgriff bei Einschwenken des Kipphebels in die der Parkbremsstellung entsprechende Kulissenöffnung der Schaltkulisse in diese eintaucht. Der Abstand des Schaltgriffes zum Gehäusekopf verkürzt sich also bei Erreichen der Parkbremsstellung. Der im Bereich der Schaltkulisse wirkende, über eine Hülse mit dem Schaltgriff verbundene Rastkörper des Handbremsventils taucht, da die Verspannung einer Feder an ihm wirkt, in die Kulissenöffnung ein; der Rastkörper kann also nur dann entriegelt werden, wenn der Schaltgriff auf sein ursprüngliches Niveau wieder nach aussen gerichtet verschoben wird. Bei Handbremsventilen, welche bei Verwendung in Nutzfahrzeugen einem verhältnismässig rauhen Betrieb unterliegen, ist es unbedingt erforderlich, dass der Rastkörper in der Position der Parkbremsung innerhalb der Kulissenöffnung der Schaltkulisse einrastet, also nach innen gerichtet eintaucht. Da der das Handbremsventil betätigende Fahrer gleichzeitig im Schwenksinne am Kipphebel bzw. am Schaltgriff desselben zieht (oder drückt), kann das selbsttätige Eintauchen des Rastkörpers gestört sein.

Es kann eine gewisse Überlagerung der den Kipphebel drehenden manuellen Kraft und der Federkraft stattfinden, welche die Neigung besitzt, den Rastkörper zusammen mit dem Schaltgriff nach innen gerichtet zu verschieben. Hierunter leidet die Feinfühligkeit, das heisst es kann unter Umständen problematisch sein, sich darüber zu vergewissern, ob die selbsttätige Rastierung erreicht ist oder nicht.

Davon ausgehend besteht die Aufgabe der Erfindung darin, ein Handbremsventil der in Rede stehenden Art so auszugestalten, dass die den Fahr- bzw. Bremsstellungen des Ventils entsprechende Kipphebelverschwenkung vollständig unabhängig von der Rastierbewegung des durch den Schaltgriff betätigbaren Rastkörpers geschieht. Es soll insbesondere verhindert werden, dass eine die Feinfühligkeit beeinträchtigende Überlagerung von Schalt- und Rastierkräften stattfindet.

Zur Lösung dieser Aufgabe dienen die Merkmale nach dem Kennzeichnungsteil des Patentanspruches 1.

Der Kipphebel ist in die erwünschten Wirkpositionen verschwenkbar, ohne dass die Rastierbewegungen beeinträchtigende Reibungen auftreten können, da die zum Verschwenken dienende Betätigungskraft am Kipphebel nicht auf die den Rastkörper tragende Schalthülse mit Lösegriff einwirkt. Es entfallen hierdurch die grossen Reibungskräfte, die dem Einrasten entgegenwirken können und die nur durch eine Feder mit entsprechend grosser Kraft überwindbar sind.

Die hieraus resultierenden kleinen Einrastkräfte erlauben es folglich, Übergangsradien an Schaltkulisse und Rastkörper klein zu halten, was zu einem kleinen, empfindlichen und labilen Einrastbereich führt, dem Hauptkriterium einer sicheren Rastiervorrichtung. Das sichere Einrasten ist nicht von der Einbaulage des Gerätes abhängig, so hat zum Beispiel eine beim Betätigen am Schaltgriff axial nach aussen wirkende Kraftkomponente (Zugrichtung) keinen Einfluss auf die Rastierfunktion, obwohl diese Kraft entgegen der Einrastbewegung verläuft.

Ein wesentlicher Vorteil ist auch darin zu sehen, dass das Einrasten sinnfällig angezeigt wird, nämlich durch ein Geräusch, durch eine vom eigentlichen Kipphebel bzw. vom Schaltgriff getrennte Bewegung des Lösegriffs, die der Fahrer verfolgen kann und möglicherweise durch eine am Lösegriff vorgesehene farbige Markierung.

Der Betätigungsbereich für die Hilfsbremse, also für den Stufungsbereich des Handbremsventils, kann durch einen an der Schaltkulisse vorgesehenen Druckpunkt begrenzt werden, das heisst vor dem Einrasten läuft der Rastkörper auf einen Anschlagbereich auf, was zur Folge hat, dass der Schwenk-Betätigungskraft am Schaltgriff ein die Position anzeigender Widerstand entgegengesetzt wird.

Vorteilhafte Ausgestaltungen und Weiterbildungen sind in den weiteren Patentansprüchen aufgeführt.

Die Erfindung ist nachfolgend anhand eines Ausführungsbeispiels unter Bezugnahme auf die beigefügte Zeichnung erläutert.

Figur 1 ist eine Teilschnittansicht des Kipphebels in seiner Führung durch die Schaltkulisse;

Figur 2 ist eine Draufsicht auf die Schaltkulisse nach Figur 1;

Figur 3 ist eine Seitenansicht des Handbremsventils unter Darstellung des Kipphebels in seinen verschiedenen Wirkpositionen.

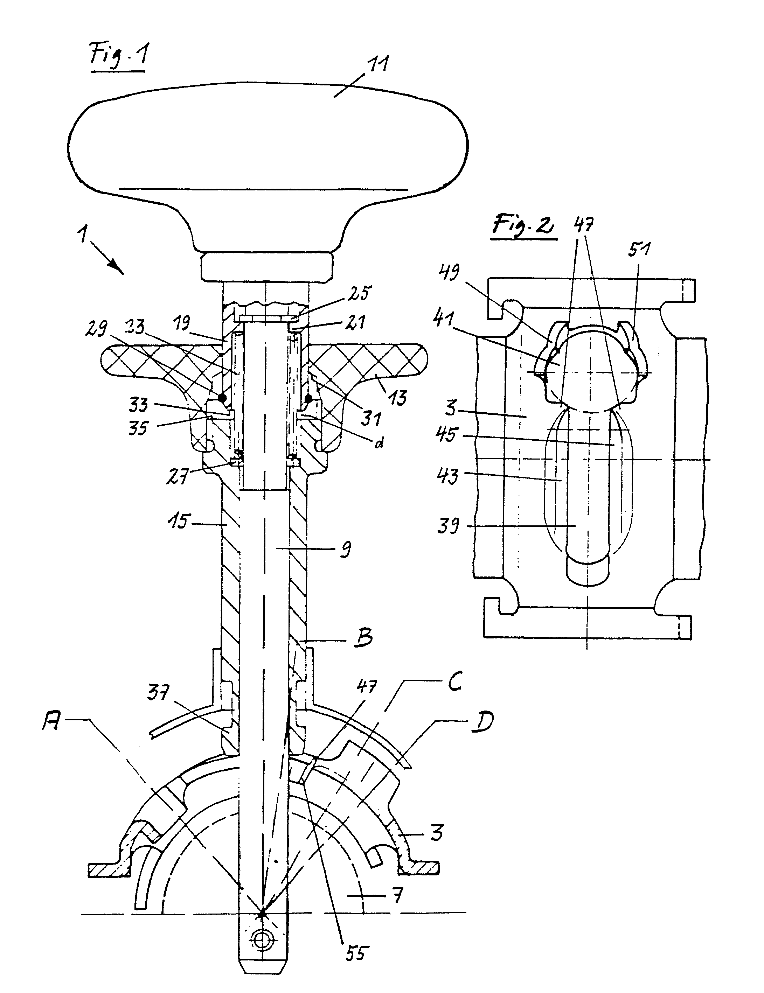

In Figur 1 der Zeichnung ist ein erfindungsgemässer Kipphebel 1 eines Handbremsventils in seinem Zusammenwirken mit einer Schaltkulisse 3 nachfolgend beschriebenen Aufbaues wiedergegeben. Der Kipphebel wirkt über einen an seinem im Gehäusekopf 5 befindlichen Ende angebrachten Steuerkörper 7 (Figur 1) auf einen (nicht dargestellten) Ventilmechanismus ein, welcher zur Steuerung der Hilfs- und Feststellbremsanlage in Lastkraftfahrzeugen mit Anhängeranschluss dient.

Der Kipphebel 1 besteht aus einer Schaltstange 9, aus einem am äussersten Ende der Schaltstange angeordneten Schaltgriff 11 und aus einer einen Lösegriff 13 tragenden Schalthülse 15. Der Schaltgriff 11 ist mit einer Griffhülse 19 verbunden, bildet also eine Einheit mit dieser, wobei der Schaltgriff mit der Griffhülse 19 relativ zur Schaltstange 9 in Längsrichtung bewegbar ist. Die Schaltstange 9 ist ihrerseits innerhalb des Gehäusekopfes 5 drehfest mit dem strichliniert wiedergegebenen Steuerkörper 7 verbunden, dass heisst, dass die Schaltstange 9 keine Axialbewegungen zu vollführen vermag, jedoch innerhalb eines bestimmten Winkelbereiches der Schaltkulisse verschwenkbar ist. Die die Schaltstange 9 in ihrem oberen Bereich (Figur 1) umgebende Griffhülse 19 besitzt eine radial nach innen gerichtete, ringförmige Schulter 21, welche unter der Einwirkung einer an ihr anliegenden, vorgespannten Feder 23 an einen mit der Schaltstange 9 in Verbindung stehenden Sicherungsring 25 angelegt ist. Das entgegengesetzte Ende der vorgespannten Feder 23 stützt sich in der aus Figur 1 ersichtlichen Weise an einer ringförmigen Schulter 27 der Schalthülse 15 ab. Am unteren Ende der Griffhülse 19 ist ein Anschlagring 29 vorgesehen, an welchen sich eine Schulter 31 im Inneren des Lösegriffs 13 anzulegen vermag, wenn der Lösegriff, ausgehend von der Position nach Figur 1, relativ zur Schaltstange 9 bzw. relativ zur Griffhülse 19 eine nach unten gerichtete Bewegung vollzieht. Die am unteren Ende (Figur 1) des Schaltgriffes 11 angeordnete Griffhülse 19 ist andererseits durch Ausüben eines in Richtung des Gehäusekopfes 5 gerichteten Druckes sowohl relativ zur Schaltstange 9 als auch relativ zur Schalthülse 15 axial gerichtet verschiebbar, bis das untere Ende 33 der Griffhülse 19 nach Zurücklegen der Strecke d (Figur 1) an die am oberen Ende der Schalthülse 15 befindliche Anschlagfläche 35 angelegt ist. In dieser Position vermag der Schaltgriff 11 auf die Schalthülse 15 einen nach unten ausgerichteten Druck auszuüben, um die Schalthülse 15 in nachfolgend beschriebener Weise zu verschieben.

An dem dem Gehäusekopf 5 zugewandten Ende der Schalthülse 15 ist ein Rastkörper 37 vorgesehen, welcher mit der Schaltkulisse 3 in im einzelnen nachfolgend beschriebener Weise zusammenwirkt, um die erforderlichen Steuerungen des Ventilmechanismus des Handbremsventils auszulösen. Die Schaltkulisse 3, welche in Einzel-Draufsicht in Figur 2 dargestellt ist, kann als einfaches Stanz-Blechteil ausgebildet sein und weist einen Kulissenschlitz 39 auf, welcher sich vom gemäss Figur 2 unteren Schlitzende bis in eine erweiterte Kulissenöffnung 41 erstreckt. Zu beiden Seiten des Kulissenschlitzes 39 befinden sich Führungsbahnen 43 und 45, auf welchen der in Figur 1 dargestellte Rastkörper 37 entlanggleitet, solange sich die Schaltstange innerhalb des Führungsbereiches des Kulissenschlitzes befindet. In der Ausführungsform nach Figur 1 besitzen die beiden Führungsbahnen, ausgehend vom äussersten Ende des Kulissenschlitzes, in Richtung der Kulissenöffnung 41 zunehmende Tiefe, das heisst, sie sind gegenüber dem Ausgangsniveau nach innen gerichtet zunehmend versetzt, so dass der Rastkörper 37, wenn er von der Position A im Uhrzeigersinn gerichtet gedreht wird, seine Höhenlage ändert, das heisst, dass er zusammen mit der Schalthülse 15 unter der Einwirkung der vorgespannten Feder 23 nach unten gerichtet (Figur 1) gedrückt wird. Am Ende der beiden Führungsbahnen 43 und 45 ändert sich deren Höhenlage relativ abrupt, das heisst, die Führungsbahnen gehen in einen erhöhten Druckpunktanschlag 47 über, welcher in etwa das gleiche Ausgangsniveau wie der Beginn der Führungsbahnen besitzt, jedoch gegenüber dem Bahnende den in Figur 1 dargestellten Niveauunterschied aufweist. Auf diese Weise ist sichergestellt, dass der Rastkörper 37 gegen den Druckpunktanschlag 47 aufläuft, wenn die im Uhrzeigersinn gerichtete Bewegung der Schaltstange fortgesetzt wird. Durch dieses Auflaufen auf den Druckpunktanschlag wird der Rastkörper 37 entsprechend der Höhe des Anschlages nach oben gerichtet verschoben, bevor er in nachfolgend beschriebener Weise in die Kulissenöffnung 41 eintaucht. Durch das Anschlagen und Aufgleiten des Rastkörpers am Druckpunktanschlag wird ein bestimmter Widerstand hervorgerufen, welcher für den den Schaltgriff 11 betätigenden Fahrer des Fahrzeuges spürbar wird und ihm als Indiz für die Position des Schaltgriffes dient.

Die Kulissenöffnung 41 ist im Bereich ihres Endes, das heisst im Bereich des oberen Endes, nach Figur 2 durch seitlich auskragende Lappen 49 und 51 begrenzt, welche infolge ihrer Einschnürung im Bereich des Öffnungsendes als Überreisssicherung dienen. Wird der Schaltgriff 11, ausgehend von der in Figur 1 angedeuteten Position B, der Position des Druckpunktes, sehr schnell im Uhrzeigersinn gerichtet «gerissen», so könnte die Gefahr bestehen, dass der Rastkörper 37 über die Kulissenöffnung 41 hinaus bewegt wird, ohne dass ein Eintauchen des Rastkörpers unter Verspannung der Feder 23 erfolgt. Dies wird, wie vorstehend erläutert ist, sicher durch die Lappen 49 und 51 verhindert, da sich diese in der Bewegungsbahn des Rastkörpers 37 befinden und als Anschlag für diesen wirken.

Die aus Figur 1 und 2 ersichtlichen, in die Bahn des Rastkörpers 37 vorstehenden Druckpunktanschläge 47 weisen in ihrer nach innen gerichteten Verlängerung Fortsätze 55 auf. Diese Fortsätze dienen gleichfalls als Anschlag, das heisst, bei in die Kulissenöffnung 41 eingetauchtem Rastkörper 37 verhindern sie ein selbsttätiges Rücklaufen des Kipphebels 1 unter der Einwirkung von (nicht dargestellten) Rückholfedern, da der Rastkörper an ihnen zur Anlage gelangt. Ein Rücklauf des Kipphebels, also der Einheit aus Schaltstange, Schalthülse und Schaltgriff, ist somit nur dann möglich, wenn der Rastkörper 37 aus der Kulissenöffnung 41 herausgehoben ist und nach links gerichtet (Figur 1) über den Druckpunktanschlag 47 gleiten kann.

## Position A: Fahrstellung

Wenn sich der Kipphebel 1 in der Position A, das heisst in der Fahrstellung befindet, dann liegt er folglich unter der Verspannung von (nicht dargestellten) Rückholfedern, welche gemäss Figur 1 gegen den Uhrzeigersinn gerichtet wirken, in Anschlagposition am Ende des Kulissenschlitzes 39 an. Mit Hilfe des (nicht dargestellten) Ventilmechanismus des Handbremsventils sind sowohl die zur Federspeicherbremsanlage als auch zum Anhängersteuerventil führenden Leitungen belüftet.

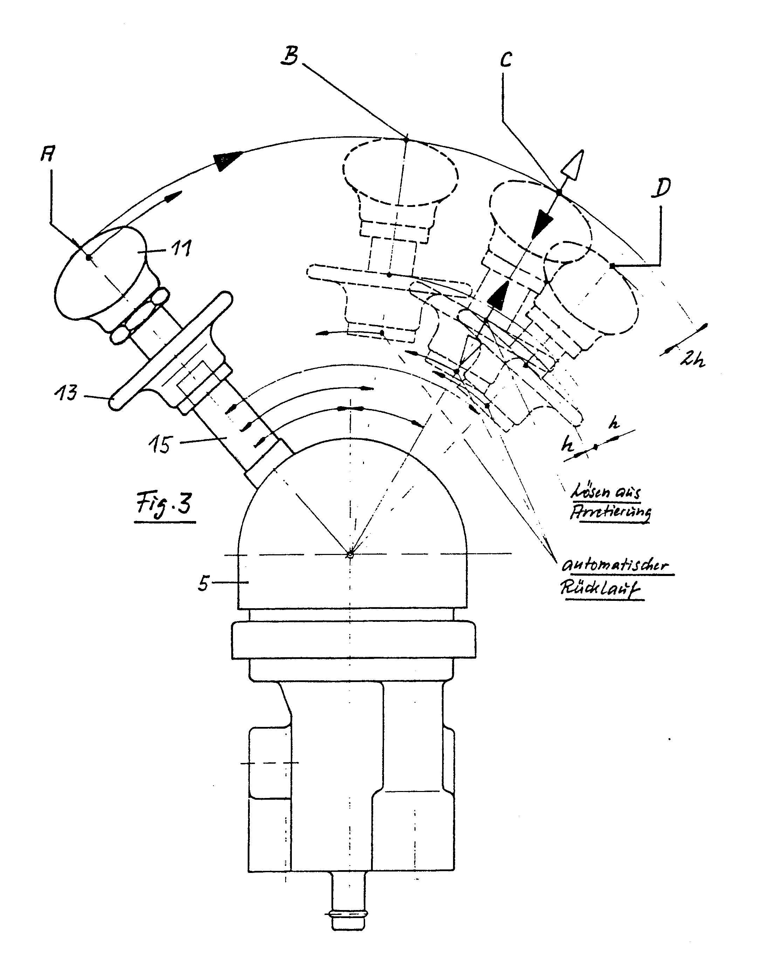

Wird der Kipphebel 1, ausgehend von der Position A (Figur 3) in Pfeilrichtung bewegt, so wird nach dem Durchlaufen eines bestimmten Betätigungswinkels mit dem gestuften Abbremsen begonnen, das heisst, die Federspeicherzylinder und die indirekte Steuerkammer des Anhängersteuerventils werden entsprechend der Winkellage des Kipphebels entlüftet. So baut sich zum Beispiel innerhalb eines Betätigungsbereiches von 10° bis 55° der Druck in den Federspeicherzylindern und in der indirekten Steuerkammer des Anhängersteuerventils proportional zum Betätigungsweg des Kipphebels ab.

## Position B: Druckpunkt (Hilfsbremsstellung)

Wenn der Kipphebel entgegen der Kraft der (nicht dargestellten) Rückholfeder in die Position B verschwenkt wird, dann entspricht diese Lage im wesentlichen der Vollbremsstellung, wobei der Rastkörper 37 an den Druckpunktanschlag 47 anschlägt bzw. an diesem aufläuft. Dies hat zur Folge, dass der den Kipphebel betätigende Fahrer des Fahrzeuges einen gewissen Widerstand spürt, da die Schalthülse 15 mit dem Rastkörper 37 entgegen der Kraft der vorgespannten Feder 23 nach Figur 1 nach oben gerichtet verschoben werden muss. Die Schalthülse 15 kann sich gemäss Figur 1 so weit nach oben gerichtet bewegen, bis die Anschlagfläche 35 der Schalthülse am Ende 33 der Griffhülse 19 anschlägt.

## Position C: Parkbremsstellung

Wenn der Kipphebel 1 die Position C erreicht hat, dann ist der Rastkörper 37 gegenüber der Kulissenöffnung 41 frei, das heisst, dass die Feder 23 die Schalthülse 15 nach Figur 1 nach unten bzw. innen gerichtet verschiebt derart, dass der Rastkörper in die Kulissenöffnung eintaucht und sich somit in der Parkbremsstellung befindet. Ein selbsttätiges Rückführen des Kipphebels aus dieser Position ist nicht mehr möglich, da der Rastkörper 37 durch die der Kulissenöffnung zugewandte Innenfläche des Druckpunktanschlages 47 gesperrt ist. In der Parkbremsstellung sind die Federspeicherzylinder des Fahrzeuges entlüftet; gleichzeitig ist der Anhänger gebremst.

## Position D: Kontrollstellung

Bei eingelegter Feststellbremse (Zugfahrzeug und Anhänger) gestattet das Handbremsventil eine Kontrolle der alleinigen Bremswirkung der Federspeicherbremsanlage des Zugfahrzeuges, indem die Bremse im Anhänger gelöst wird. Zu diesem Zweck übt der Fahrer des Fahrzeuges in der Parkbremsstellung auf den Schaltgriff 11 einen gemäss Figur 1 bzw. Figur 3 nach innen gerichteten Druck aus. Wenn der Schaltgriff 11 in der Parkbremsstellung des Kipphebels (Position C) nach innen gerichtet gedrückt wird, dann legt sich das Ende 33 der Griffhülse 19 an die Anschlagfläche 35 auf, so dass nachfolgend die Schalthülse 15 mit dem Rastkörper 37 nach innen gerichtet verschiebbar ist. Der Rastkörper 37 taucht so weit nach innen gerichtet ein, dass er nunmehr durch nachfolgendes Verschwenken des Kipphebels 1 unterhalb der Schaltkulisse 3 entlanggleiten kann. Der Kipphebel ist nun frei, in die Position D verschwenkt zu werden, in die sogenannte Kontrollstellung, in welcher mit Hilfe des (nicht dargestellten) Ventilmechanismus eine Belüftung der zum Anhängersteuerventil führenden Leitung vollzogen wird. Dadurch wird die Bremse im Anhänger gelöst und die Bremswirkung des Zugfahrzeuges lässt sich kontrollieren. Solange der Kontrollvorgang durchgeführt wird, muss der Kipphebel 1 festgehalten werden. Beim Loslassen bewegt er sich automatisch in die Parkbremsstellung. Hierbei gleitet der Rastkörper 37 unter Einwirkung der durch das Niederdrücken des Schaltgriffes in umgekehrtem Sinne verspannten Feder wieder nach oben und zwar so weit, dass die Feder 23 ihre entspannte Lage besitzt. In dieser Lage der Feder befindet sich der Rastkörper 37 wieder im Bereich der Kulissenöffnung 41 und der Schaltgriff 11 besitzt seine ursprüngliche Höhenlage, wie sie in Figur 3 unter Bezugnahme auf die Positionen A, B und C dargestellt ist.

Das Lösen der Federspeicherbremsanlage aus der Parkbremsstellung geschieht durch Ziehen am Lösegriff 13, derart, dass der Rastkörper 37 unter gleichzeitiger Verspannung der Feder 23 aus der Kulissenöffnung 41 herausgehoben wird und sich die Unterseite des Rastkörpers bei gegen den Uhrzeigersinn gerichteter Verschwenkung nunmehr auf der Oberseite der Führungsbahnen 43 und 45 im Bereich des Druckpunktanschlages anlegen kann. Aus dieser Position heraus kann sich der Kipphebel selbsttätig in die Position A, das heisst in die Fahrstellung, bewegen, da an ihm ständig die Rückholfedern einwirken.

Ein selbsttätiger Rücklauf des Kipphebels aus der Parkbremsstellung in die Fahrstellung ist ohne Herausheben des Rastkörpers aus der Kulissenöffnung nicht möglich, da die Fortsätze 55 verhindern, dass der Rastkörper 37 in eingetauchtem Zustand gegen den Uhrzeigersinn gerichtet (Figur 1) verschwenkt werden kann. Der Rastkörper legt sich also an die Fortsätze 55 an.

Der Kipphebel wurde vorstehend unter Bezugnahme auf eine Konstruktion beschrieben, bei welcher der Rastkörper 37 zwischen der Position A und der Position B auf Führungsbahnen 43 und 45 gleitet, deren Niveau sich ändert. In gleicher Weise ist es natürlich möglich, dass der Rastkörper zwischen den Positionen A und B auf Führungsbahnen gleitet, welche niveaugleich mit der Oberseite des Kulissenkörpers liegen. Bei einer derartigen Anordnung ist es natürlich erforderlich, dass sich der Druckpunktanschlag über das Niveau des Kulissenkörpers hinaus erstreckt, um zu gewährleisten, dass sich der Rastkörper an ein Hindernis anlegt, bevor durch weiteres Verschwenken des Kipphebels das Eintauchen des Rastkörpers in die Kulissenöffnung vollzogen wird.

Vorteilhafterweise ist der Lösegriff und die mit ihm verbundene Schalthülse in den Bewegungen festgelegt, das heisst, dass beim Eintauchen des Rastkörpers 37 in die Kulissenöffnung das Ende dieser Eintauchbewegung erreicht ist, wenn sich die Schulter 31 des Lösegriffs 13 an den Anschlagring 29 der Griffhülse 19 angelegt hat.

Knorr-Bremse GmbH  München,
Moosacher Strasse 80  den 21. Februar 1984
8000 München 40  TP1-hn/bu
  – 1781 –

*Bezugszeichenliste*

|      |                    |
|------|--------------------|
| (1)  | Kipphebel          |
| (3)  | Schaltkulisse      |
| (5)  | Gehäusekopf        |
| (7)  | Steuerkörper       |
| (9)  | Schaltstange       |
| (11) | Schaltgriff        |
| (13) | Lösegriff          |
| (15) | Schalthülse        |
| (19) | Griffhülse         |
| (21) | Schulter           |
| (23) | Feder              |
| (25) | Sicherungsring     |
| (27) | Schulter           |
| (29) | Anschlagring       |
| (31) | Schulter           |
| (33) | Ende               |
| (35) | Anschlagfläche     |
| (37) | Rastkörper         |
| (39) | Kulissenschlitz    |
| (41) | Kulissenöffnung    |
| (43) | Führungsbahn       |
| (45) | Führungsbahn       |
| (47) | Druckpunktanschlag |
| (49) | Lappen             |
| (51) | Lappen             |
| (55) | Fortsatz           |

## Patentansprüche

1. Handbremsventil für Bremsanlangen, insbesondere von Kraftfahrzeugen, zur Betätigung des Hilfs- und Feststellbremssystems, mit einem in einem Ventilgehäuse drehbar geführten, mit einem Steuerkörper (7) zum Betätigen des Handbremsventilmechanismus verbundenen, am äusseren Ende einen Schaltgriff (11) tragenden Kipphebel (1), welcher unter Führung einer am Ventilgehäuse angeordneten Schaltkulisse (3) in unterchiedliche Wirkpositionen verschwenkbar ist, und mit einem an der Schaltstange (9) des Kipphebels (1) geführten Lösegriff (13), der in vorbestimmter Schwenkposition des Kipphebels (1) unter der Vorspannung einer auf ihn einwirkenden Feder (23) in die Parkbremsstellung einrastbar ist, wobei der Lösegriff (13) am äusseren Ende einer die Schaltstange (9) umgebenden Schalthülse (15) angebracht ist, die ihrerseits an ihrem inneren, im Ventilgehäuse des Handbremsventils geführten Ende einen Rastkörper (37) trägt, dadurch gekennzeichnet, dass der Schaltgriff (11) am äusseren Ende einer bezüglich der Schaltstange (9) verschiebbaren Griffhülse (19) angebracht ist, und dass die auf den Lösegriff (13) einwirkende Feder (23) zwischen einer im Inneren der Griffhülse (19) angeordneten Schulter (21) und einer im Inneren der Schalthülse (15) angeordneten Schulter (27) verspannbar ist.

2. Handbremsventil nach Anspruch 1, dadurch gekennzeichnet, dass die äussere Endlage der Griffhülse (19) durch Anlage an einem von der Schaltstange (9) getragenen Anschlag (25) begrenzt ist, während die Relativlage der Schalthülse (15) zur Griffhülse (19) durch die Wirkpositionen des Rastkörpers (37) in der Schaltkulisse (3) gegeben ist.

3. Handbremsventil nach Anspruch 1 oder 2, bei welchem der Rastkörper zwischen Fahrstellung und Parkbremsstellung in einer die Feder verspannenden Höhenlage auf der Oberseite der Schaltkulisse (3) geführt ist, dadurch gekennzeichnet, dass die Feder (23) in der Parkbremsstellung bei in eine Öffnung der Schaltkulisse (3) eingetauchtem Rastkörper (37) durch nach innen gerichtete Relativverschiebung des Schaltgriffes (11) verspannbar ist, derart, dass der Rastkörper (37) in seiner innersten Relativlage bezüglich der Schaltstange (9) unterhalb des Schaltkulissenniveaus in die Kontrollstellung des Handbremsventils verschwenkbar ist.

4. Handbremsventil nach einem der vorangehenden Ansprüche, dadurch gekennzeichnet, dass die an ihrem inneren Ende den Rastkörper (37) tragende Schalthülse (15) in der Parkbremsstellung des Kipphebels in eine die Feder (23) verspannende Lage nach aussen gerichtet ziehbar ist, derart, dass der Rastkörper (37) in herausgezogenem Zustand auf das Niveau auf der Oberseite der Schaltkulisse (13) zurückführbar ist.

## Claims

1. Hand brake control valve for braking systems, in particular of motor vehicles, for acutation of the auxiliary and parking brake system, comprising an arm-rocker lever (1) bearing a selector handle (11) at its outside end, which arm-rocker lever is guided for rotation inside a valve housing, is connected to a control member (7) to actuate the hand brake control valve mechanism, can be guided by a shifting gate (3) arranged at said valve housing so as to be orientable into different operative positions, and comprising a release handle (13) guided at the switching bar (9) of said arm-rocker lever (1), which release handle can be locked into the parking brake position under the biassing action of a spring (23) bearing upon said release handle when said arm-rocker lever is in a predetermined swing position, said release handle (13) being attached at the outside end of a connecting bush (15) surrounding the switching bar (9) and bearing, in its turn, a locking element (37) at its inside end guided within the valve housing of the hand brake control valve, characterized in that said selector handle (11) is attached at the outside end of a grip sleeve (19) displaceable relative to the swithcing bar, and that the spring (23) bearing upon said release handle (13) can be tensioned between a shoulder (21) arranged inside said grip sleeve (19) and a shoulder (27) arranged inside said connecting bush (15).

2. Hand brake control valve according to Claim 1, characterized in that the extreme outer position of said grip sleeve (19) is limited by application against a stop element (25) supported on said switching bar (9) whereas the position of said connecting bush (15) relative to said grip sleeve (19) is defined by the operative positions of said locking element (37) in the shifting gate (3).

3. Hand brake control valve according to Claims 1 or 2, wherein said locking element is guided between a traveling position and a parking brake position on the top side of said shifting gate (3) at a vertical level in which said spring is tensioned, characterized in that in the parking brake position, with said locking element (37) being plunged into an opening of said shifting gate (3), said spring (23) can be tensioned by a relative displacement of said selector handle (11) in an inward direction such that said locking element (37) in its innermost relative position can be oriented with reference to said switching bar (9) below the level of said shifting gate into the control position of the hand brake control valve.

4. Hand brake control valve according to any of the preceding Claims, characterized in that with said arm-rocker lever being in the parking brake position, said connecting bush (15), which supports said locking element (37) at its inner end, can be drawn in an outward direction into a position tensioning said spring (23) such that said locking element (37) in a withdrawn condition can be returned to the level on the top side of said shifting gate (13).

**Revendications**

1. Robinet de frein à main pour des installations de freinage, en particulier de véhicules automobiles, servant à commander le système de freinage de secours ou de freinage en stationnement, comportant un levier basculant (1) guidé en rotation dans un carter de soupape, relié à un corps de contrôle (7) pour commander le mécanisme du robinet de frein et portant à son extrémité extérieure une poignée de commutation (11), lequel levier basculant pouvant être basculé avec guidage d'une coulisse de commutation (3) disposée dans le carter de robinet, dans différentes positions de travail, et comportant en outre une poignée de desserrage (19) guidée sur la tige de commutation (9) du levier basculant (1) et qui dans une position de basculement prédéterminée de levier basculant (1), est susceptible d'enclenchement dans la position de freinage de stationnement, sous l'effet de l'armement préalable d'un ressort (23) agissant sur elle, la poignée de desserrage (19) étant montée sur l'extrémité extérieure d'une douille de commutation (15) qui entoure la tige de commutation (9) et qui, à son tour, porte à son extrémité intérieure, guidée dans le carter du robinet de frein à main, un corps d'enclenchement (37), caractérisé par le fait que la poignée de commutation (11) est montée sur l'extrémité extérieure d'une douille de poignée (19) susceptible d'être déplacée par rapport à la tige de commutation (9), et que le ressort (23) qui agit sur la poignée de desserrage (13) est susceptible d'être armé entre un épaulement (21) prévu à l'intérieur de la douille de poignée (19) et un épaulement (27) prévu à l'intérieur de la douille de commutation (15).

2. Robinet de frein à main selon la revendication 1, caractérisé par le fait que la position d'extrémité extérieure de la douille de poignée (19) est limitée par une butée (25) portée par la tige de commutation (9), alors que la position relative de la douille de commutation (15) par rapport à la douille de poignée (19) est déterminée par les positions de travail du corps d'enclenchement (37) dans la coulisse de commutation (3).

3. Robinet de frein à main selon la revendication 1 ou 2, dans lequel le corps d'enclenchement est amené entre la position de roulement et la position de freinage en stationnement, sur le côté supérieur de la coulisse de commutation (3) à un niveau qui arme le ressort, caractérisé par le fait que dans la position de freinage en stationnement et lors de la pénétration du corps d'enclenchement (37), dans une ouverture ménagée dans la coulisse de commutation (3), le ressort (23) est suceptible d'être armé par le déplacement relatif et dirigé vers l'intérieur de la poignée de commutation (11), de manière que le corps d'enclenchement (37), dans sa position relative la plus intérieure par rapport à la tige de commutation (9), et en dessous du niveau de la coulisse de commutation, soit basculable dans la position de contrôle du robinet de frein à main.

4. Robinet de frein à main selon l'une des revendications précédentes, caractérisé par le fait que la douille de commutation (15) qui porte à son extrémité intérieure le corps d'enclenchement (37), est, lorsque le levier basculant est dans sa position de freinage en stationnement, susceptible d'être déplacée vers l'extérieur, dans une position qui arme le ressort (23), de façon que le corps d'enclenchement (37), dans son état dégagé, est susceptible d'être ramené au niveau sur le côté supérieur de la coulisse de commutation (13).

0 152 816

Fig.1

Fig.2

A

11

13

15

*Fig. 3*

5

B

C

D

2h

h

h

h

*Lösen aus Arretierung*

*automatischer Rücklauf*